(19) Europäisches Patentamt
European Patent Office
Office européen des brevets

(11) **EP 2 005 849 A2**

(12) **EUROPEAN PATENT APPLICATION**
published in accordance with Art. 153(4) EPC

(43) Date of publication:
**24.12.2008 Bulletin 2008/52**

(51) Int Cl.:
*A24F 13/04* (2006.01)　　*A24D 3/16* (2006.01)
*B01D 53/94* (2006.01)　　*B01J 21/06* (2006.01)
*B01J 23/72* (2006.01)　　*B01J 23/80* (2006.01)
*B01J 23/889* (2006.01)

(21) Application number: **07739867.5**

(22) Date of filing: **27.03.2007**

(86) International application number:
**PCT/JP2007/056429**

(87) International publication number:
**WO 2007/116751 (18.10.2007 Gazette 2007/42)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **30.03.2006 JP 2006095824**

(71) Applicant: **Japan Tobacco, Inc.**
**Tokyo 105-8422 (JP)**

(72) Inventor: **SUGAI, Kazunori**
**Minato-ku**
**Tokyo 105-8422 (JP)**

(74) Representative: **Behnisch, Werner**
**Reinhard, Skuhra, Weise & Partner GbR**
**Patent- und Rechtsanwälte**
**Friedrichstrasse 31**
**80801 München (DE)**

(54) **METHOD OF TREATING TOBACCO MAINSTREAM SMOKE AND SMOKING TOOL**

(57)　　There is provided a smoking tool that is capable of selectively removing carbon monoxide in tobacco mainstream smoke. The smoking tool (1) is **characterized by** comprising a catalyst packed section (4) packed with an oxidation catalyst (3) capable of selectively removing carbon monoxide relative to nicotine among components of the tobacco mainstream smoke, into which tobacco mainstream smoke is introduced, and a heating means (5) for heating the catalyst packed section (4).

FIG.1

**Description**

Technical Field

The present invention relates to a method of treating tobacco mainstream smoke and a smoking tool.

Background Art

Conventionally, it has been proposed to add various adsorbents and modifiers to the filter in order to remove hazardous substances in tobacco smoke.

Further, known is a smoking article comprising a rod of a smoking material and a filter section connected to the rod, wherein the filter section includes means for collecting particulate matter in smoke generated from the smoking material rod into a collecting zone, and means for heating the collecting zone such that a nonvolatile material is maintained in the filter and a semi-volatile material is released from the filter (see Jpn. Pat. Appln. KOKAI Pub. No. 4-262773).

However, no effective means for selectively removing carbon monoxide from tobacco mainstream smoke are known so far.

Disclosure of Invention

An object of the present invention is to provide a method of treating tobacco mainstream smoke and a smoking tool that is capable of selectively removing carbon monoxide in tobacco mainstream smoke.

A method of treating tobacco mainstream smoke according to an aspect of the present invention is characterized by comprising: introducing tobacco mainstream smoke into a heated catalyst packed section packed with an oxidation catalyst containing copper oxide, and selectively removing carbon monoxide relative to nicotine among components of the tobacco mainstream smoke.

In the method of the present invention, the catalyst packed section is preferably heated to a temperature in a range of 200 to 350°C.

A smoking tool according to another aspect of the present invention is characterized by comprising: a catalyst packed section packed with an oxidation catalyst capable of selectively removing carbon monoxide relative to nicotine among components of the tobacco mainstream smoke, into which tobacco mainstream smoke is introduced; and a heating means for heating the catalyst packed section.

In the smoking tool of the present invention, the oxidation catalyst is selected from the group consisting of Hopcalite (registered trademark), $CuO/ZnO$, $CuO/ZnO_2$ and $CuO/CeO_2$. Further, the heating means is set to heat the catalyst packed section to a temperature preferably in a range of 200 to 350°C, more preferably in a range of 200 to 280°C.

The smoking tool of the present invention may comprise a cooling section which cools the tobacco mainstream smoke and/or a filter material which collects tar at a rear section of the catalyst packed section.

According to the present invention, it makes possible to provide a method of treating tobacco mainstream smoke and a smoking tool capable of selectively removing carbon monoxide in tobacco mainstream smoke.

Brief Description of Drawings

FIG. 1 is a schematic view showing a state where a cigarette is attached to a smoking tool according to an embodiment of the present invention.
FIG. 2 is a diagram showing selective filtration coefficient of nicotine to CO when various oxidation catalysts are used.
FIG. 3 is a graph showing temperature of Hopcalite, and change in delivery rates of nicotine, CO and NO.

Best Mode for Carrying Out the Invention

Examples of the present invention are described below with reference to drawings.

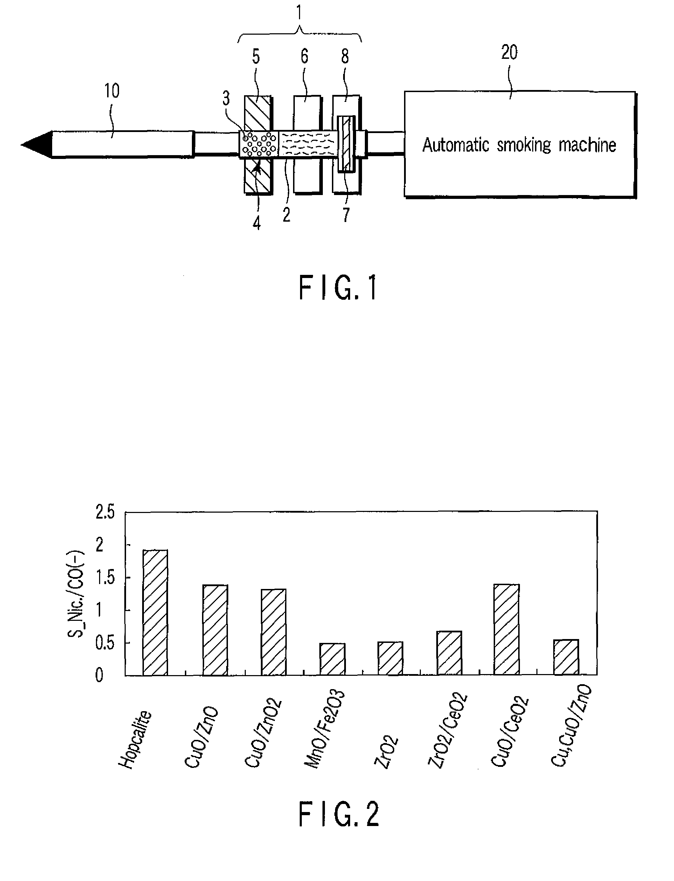

FIG. 1 is a schematic view showing a device setup for performing an experiment in the state where a cigarette is attached to a smoking tool according to an example of the present invention. As shown in FIG. 1, a cigarette single rod 10 is attached to the upstream of the smoking tool 1, and an automatic smoking machine 20 is connected to a mouthpiece end of the smoking tool 1. The smoking tool 1 comprises a catalyst packed section 4 packed with an oxidation catalyst 3, a stainless tube 2 filled with glass wool (110 to 130 mg), and a filter material 7 which collects tar. A heater 5 serving as a heating means is provided around the catalyst packed section 4. A first cooling section 6 is provided around the stainless tube 2 filled with glass wool. A second cooling section 8 is provided around the filter material 7.

With the above device setup, gas components in tobacco mainstream smoke which has passed through the smoking tool 1 were measured in the following experimental procedures.

(1) Measurement of CO, $CO_2$, and $O_2$

The catalyst packed section 4 is packed with 200 mg of oxidation catalyst and capped with a stainless mesh. The catalyst packed section 4 is heated with the heater 5 to a predetermined experimental temperature and then left for 30 minutes. After it is checked that there is no leakage, an aluminum bag is fitted to the automatic smoking machine 20 so as to introduce dilution air. The reason for introducing dilution air is that a certain amount of gas is necessary for CO measurement. A commercial cigarette single rod 10 is smoked under the condition of 17.5 ml per two seconds. Seven puffs and one clearing puff are performed. The dilution air introduced above and tobacco mainstream smoke generated through automatic smoking are collected in one bag. CO, $CO_2$ and $O_2$ are quantified with a portable gas analyzer (available from Horiba, Ltd.). The above experiment is repeated twice to determine the average value.

(2) Measurement of NO and $NO_x$

The catalyst packed section 4 is packed with 200 mg of oxidation catalyst and capped with a stainless mesh. The catalyst packed section 4 is heated with the heater 5 to a predetermined experimental temperature and then left for 30 minutes. Eight aluminum bags are prepared for one experiment (seven puffs and one clearing puff) to collect smoke for each puff. After it is checked that there is no leakage, another aluminum bag prepared separately containing dilution air is fitted. A commercial cigarette single rod 10 is smoked under the condition of 17.5 ml per two seconds. Seven puffs and one clearing puff are performed, while the bag is changed for each puff. NO and $NO_x$ of the collected gas for each bag are quantified with a portable gas analyzer (available from Horiba, Ltd.). The above experiment is repeated twice to determine the average value.

The oxidation catalyst used is Hopcalite ($MnO_2$-CuO), CuO/ZnO, $CuO/ZnO_2$, $MnO/Fe_2O_3$, $ZrO_2$, $ZrO_2/CeO_2$, $CuO/CeO_2$, or Cu, $CuO/CeO_2$ (each crushed product with a grain size of 0.5 to 2 mm). The experiment was performed with the catalyst packed section 4 heated to 350°C, and the selective filtration coefficients of components of the collected gas were determined.

The selective filtration coefficient is defined as follows. Given that the amount of a component come out from the cigarette single rod (without the smoking tool) is $A_{in}$, and the amount of a component come out from the smoking tool when the smoking tool is attached to the cigarette single rod is $A_{out}$, the delivery rate (1-E)_A of component A is represented by the following expression: (1-E)_A = $A_{out}/A_{in}$. Here, the selective filtration coefficient S_B/A between component A (for example, CO) and component B (for example, nicotine) is represented by the following expression:

$$S\_B/A = (1-E)\_B/(1-E)\_A$$

Table 1 and FIG. 2 show the results.

As shown in Table 1 and FIG. 2, in the case of using Hopcalite, CUO/ZnO, $CuO/ZnO_2$, or $CuO/CeO_2$ as the oxidation catalyst, the value of "S_Nic./CO" exceeds 1 in the experiment carried out at 350°C, which shows that carbon monoxide is selectively removed relative to nicotine among the components of tobacco mainstream smoke.

[Table 1]

| Oxidation catalyst | (1-E)_Nic/(1-E)_CO |
|---|---|
| Hopcalite | 1.91 |
| CuO/ZnO | 1. 37 |
| $CuO/ZnO_2$ | 1.31 |
| $MnO/Fe_2O_3$ | 0.48 |
| $ZrO_2$ | 0.48 |
| $ZrO_2/CeO_2$ | 0.65 |
| $CuO/CeO_2$ | 1.34 |
| Cu, CuO/ZnO | 0.53 |

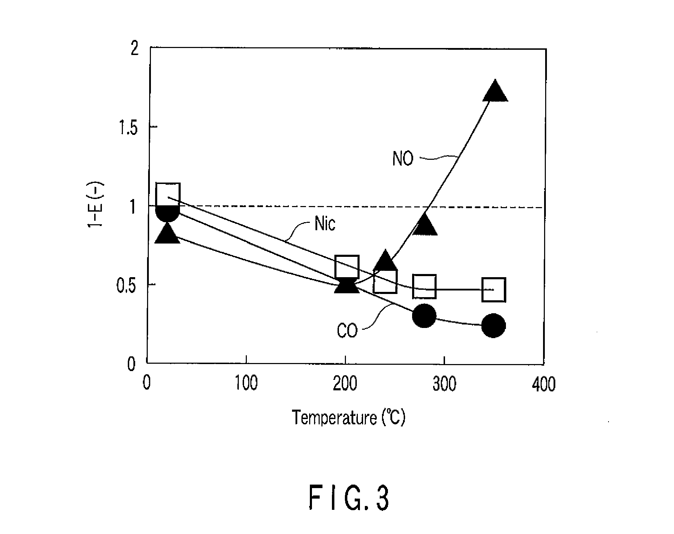

Next, experiments were performed at various temperatures using Hopcalite which exhibited the best selective removal rate for carbon monoxide relative to nicotine, and the delivery rates (1-E) for CO, NO and nicotine in the components of the collected gas were determined. Table 2 and FIG. 3 show the results.

[Table 2]

| Temperature | CO | NO | Nicotine |
|---|---|---|---|
| Room temperature (22°C) | 0.96 | 0.82 | 1.05 |
| 200°C | 0.52 | 0.52 | 0.62 |
| 240°C | | 0.66 | 0.51 |
| 280°C | 0.30 | 0.89 | 0.49 |
| 350°C | 0.24 | 1.73 | 0.47 |

Table 2 and FIG. 3 show the following. When the temperature of the catalyst packed section falls in a range of 200 to 350°C, the value of S_Nic./CO is substantially larger than 1, making it possible to remove carbon monoxide well selectively relative to nicotine. However, it is more preferable to set the temperature of the catalyst packed section to a range of 200 to 280°C, because the delivery rate of NO increases when the temperature exceeds 280°C.

**Claims**

1. A method of treating tobacco mainstream smoke, **characterized by** comprising: introducing tobacco mainstream smoke into a heated catalyst packed section packed with an oxidation catalyst containing copper oxide, and selectively removing carbon monoxide relative to nicotine among components of the tobacco mainstream smoke.

2. The method according to claim 1, **characterized in that** the catalyst packed section is heated to a temperature in a range of 200 to 350°C.

3. A smoking tool **characterized by** comprising:

   a catalyst packed section packed with an oxidation catalyst capable of selectively removing carbon monoxide relative to nicotine among components of the tobacco mainstream smoke, into which tobacco mainstream smoke is introduced; and
   a heating means for heating the catalyst packed section.

4. The smoking tool according to claim 3, **characterized in that** the oxidation catalyst is selected from the group consisting of Hopcalite (registered trademark), CuO/ZnO, $CuO/ZnO_2$ and $CuO/CeO_2$.

5. The smoking tool according to claim 3, **characterized in that** the heating means heats the catalyst packed section to a temperature in a range of 200 to 350°C.

6. The smoking tool according to claim 5, **characterized in that** the heating means heats the catalyst packed section to a temperature in a range of 200 to 280°C.

7. The smoking tool according to claim 3, **characterized by** comprising a cooling section which cools the tobacco mainstream smoke and/or a filter material which collects tar at a rear section of the catalyst packed section.

FIG. 1

FIG. 2

F I G. 3

**EP 2 005 849 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4262773 A